# EUROPEAN PATENT APPLICATION

(11) **EP 1 168 477 A2**
(43) Date of publication of application: **02.01.2002**
(21) Application number: 01305668.4
(22) Date of filing: 29.06.2001
(51) Int. Cl.: H01M 8/08, H01M 8/02, H01M 8/04

(54) **Method for producing a phosphoric acid fuel cell**

(30) Priority: 30.06.2000 JP 2000199637
(71) Applicant: Honda Giken Kogyo Kabushiki Kaisha, Minato-ku, Tokyo 107-8556 (JP)
(72) Inventor: Oyanagi, Hiroyuki, Wako-shi, Saitama-ken 351-0193 (JP); Iguchi, Masaru, Wako-shi, Saitama-ken 351-0193 (JP); Akita, Hiroshi, Wako-shi, Saitama-ken 351-0193 (JP); Ohba, Tsugio, Wako-shi, Saitama-ken 351-0193 (JP)
(74) Representative: Matthews, Derek Peter

(57) **Abstract**

A phosphoric acid fuel cell is efficiently produced. As a matrix, a material is used which can hold therein a impregnating liquid electrolyte and which can release the impregnating liquid electrolyte when the material is pressed. In step S1, the matrix is impregnated with the liquid electrolyte such as phosphoric acid, sulfuric acid, and methanesulfonic acid to provide an electrolyte layer (18). In step S2, the electrolyte layer (18) is interposed between an anode electrode (14) and a cathode electrode (16) to provide a stack. In step S3, the stack is pressed. By pressing the stack, the electrolyte layer (18) is joined to the anode electrode (14) and the cathode electrode (16) and the liquid electrolyte is diffused from the matrix to electrode catalyst layers (12, 12) of both of the electrodes (14, 16).

## Description

### BACKGROUND OF THE INVENTION

### Field of the Invention:

The present invention relates to a method for producing a phosphoric acid fuel cell. Specifically, the present invention relates to a method for producing a phosphoric acid fuel cell, in which the phosphoric acid fuel cell can be efficiently produced in comparison with a conventional production method.

### Description of the Related Art:

The phosphoric acid fuel cell is usually produced as follows.

Pores of porous silicon carbide are impregnated with a liquid electrolyte such as phosphoric acid, sulfuric acid, and methanesulfonic acid to manufacture an electrolyte layer thereby at first. In other words, the liquid electrolyte is carried on the porous silicon carbide. The carrier such as the porous silicon carbide for carrying the liquid electrolyte is referred to as "matrix" in the following description.

One end surface of woven fabric or nonwoven fabric of carbon fiber is applied with carbon or the like on which a platinum-based alloy or the like is carried. Thus, an anode electrode and a cathode electrode are manufactured, each of which uses the former as a gas diffusion layer and the latter as an electrode catalyst layer. The electrode catalyst layers of both of the electrodes are also impregnated with the liquid electrolyte.

Subsequently, the electrolyte layer is interposed between the anode electrode and the cathode electrode to provide a stack. The anode electrode and the cathode electrode are stacked so that the respective electrode catalyst layers can be directed toward the electrolyte layer.

Subsequently, the stack is pressed so that the anode electrode and the cathode electrode can be joined to the electrolyte layer to provide an electrolyte electrode assembly. A power-generating cell is constructed by interposing the electrolyte electrode assembly thus obtained between a pair of separators.

After a predetermined number of the power-generating cells are electrically connected in series, a collecting electrode, which is electrically connected to the anode electrodes of the respective power-generating cells, is attached to the power-generating cell positioned at a first end. A collecting electrode, which is electrically connected to the cathode electrodes of the respective power-generating cells, is attached to the power-generating cell positioned at a second end. Further, end plates are attached to the outer sides of the respective collecting electrodes. The end plates are joined to one another by bolts or the like. Accordingly, a fuel cell stack is constructed.

Finally, the fuel cell can be obtained by accommodating the fuel cell stack in a container.

As described above, not only the matrix for constructing the electrolyte layer but also the respective electrode catalyst layers of the anode electrode and the cathode electrode should be impregnated with the liquid electrolyte in the conventional method for producing the phosphoric acid fuel cell. If the respective electrode catalyst layers are not impregnated with the liquid electrolyte, a velocity of advancing the electrode reaction is slow on each of the anode electrode and the cathode electrode. Then, cell characteristics of a phosphoric acid fuel cell are not satisfying.

However, the water-repelling property is usually given to the electrode catalyst layer in order to quickly remove from the container steam and water which are generated when the phosphoric acid fuel cell is operated. Therefore, a long period of time must be used for the step of impregnating the respective electrode catalyst layers of both of the electrodes with phosphoric acid or sulfuric acid (liquid electrolyte) as an aqueous solution. Consequently, there is a problem that efficiency of producing the phosphoric acid fuel cell is not improved.

### SUMMARY OF THE INVENTION

It is an object of the present invention to provide a method for producing a phosphoric acid fuel cell in which a step of impregnating respective electrode catalyst layers of both electrodes with a liquid electrolyte is not necessary, thereby making it possible to efficiently produce the phosphoric acid fuel cell.

To achieve the above object, the present invention resides in a method for producing a phosphoric acid fuel cell, comprising the steps of:
impregnating,a matrix with a liquid electrolyte;
allowing the matrix impregnated with the liquid electrolyte to be interposed between an anode electrode and a cathode electrode each having an electrode catalyst layer to provide a stack; and
joining the matrix to the anode electrode and the cathode electrode by pressing the stack to provide an electrolyte electrode assembly, wherein:
   the liquid electrolyte, with which the matrix is impregnated, is extruded to impregnate the electrode catalyst layers therewith when the joining step is performed.

In the method for producing the phosphoric acid fuel cell according to the present invention, the liquid electrolyte impregnating the matrix is partially pressed and extruded to diffuse to the electrode catalyst layers. Therefore, it is not necessary to perform the step of previously impregnating the electrode catalyst layer with the liquid electrolyte. In other words, it is possible to reduce the time for manufacturing the electrolyte electrode assembly and, consequently, possible to efficiently produce the phosphoric acid fuel cell.

A basic polymer having a structural unit of a monomer of secondary amine can be a preferable example of the matrix which can hold therein the impregnating liquid electrolyte and which can release the impregnating liquid electrolyte when the matrix is pressed. Since the liquid electrolyte is acidic in the phosphoric acid fuel cell, the liquid electrolyte is strongly attracted by the basic polymer of the matrix. Accordingly, even if steam and water are generated when the phosphoric acid fuel cell is operated, the liquid electrolyte is greatly prevented from leaking from the matrix with the generated stream and water.

Polybenzimidazole can be a specifically preferable example of the basic polymer.

A force of pressing the stack in the joining step is preferably 10⁶ Pa (1 MPa) to 4 x 10⁶ Pa (4 MPa). If the pressing force is less than 1 MPa, the electrolyte layer may not be sufficiently joined to the anode electrode and the cathode electrode. If the pressing force exceeds 4 MPa, the gas diffusion layer or the electrode catalyst layer of the anode electrode or the cathode electrode may be damaged.

A heating treatment, in which a temperature is up to 200 °C, is preferably applied to the stack in the joining step, thereby making it possible to durably join the electrolyte layer to the anode electrode and the cathode electrode. Further, the diffusion of the liquid electrolyte to the electrode catalyst layer is facilitated.

In the above case, the sufficient heating treatment time is 20 seconds to 60 seconds. If the heating treatment time is less than 20 seconds, the electrolyte layer is not sufficiently joined to the anode electrode and the cathode electrode. By contrast, the efficiency of producing the phosphoric acid fuel cell is lowered if the heating treatment time expeeds 60 seconds.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 shows a flow chart illustrating a method for producing a phosphoric acid fuel cell according to an embodiment of the present invention;
FIG. 2 shows an exploded perspective view illustrating an anode electrode, an electrolyte layer, and a cathode electrode provided for the phosphoric acid fuel cell;
FIG. 3 shows, with partial cross section, a schematic perspective view illustrating a state in which an electrolyte electrode assembly is manufactured;
FIG. 4 shows a schematic cross-sectional view illustrating an arrangement of a power-generating cell provided for the phosphoric acid fuel cell;
FIG. 5 shows a graph illustrating a relationship between the number of molecules of impregnated phosphoric acid and the thickness of a matrix in Examples 1 to 4;
FIG. 6 illustrates a schematic arrangement of a fuel cell system constructed by incorporating peripheral equipments for the phosphoric acid fuel cell provided with the power-generating cell shown in FIG. 4; and
FIG. 7 shows a graph illustrating a relationship between the number of molecules of impregnated phosphoric acid and the discharge current density in Examples 1 to 4.

### DESCRIPTION OF THE PREFERRED EMBODIMENTS

The method for producing the phosphoric acid fuel cell according to the present invention will be explained in detail below with reference to the accompanying drawings, as exemplified by preferred embodiments.

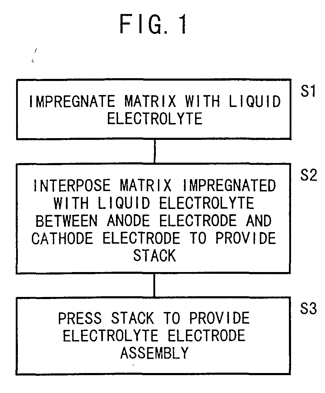

FIG. 1 shows a flow chart illustrating the method for producing the phosphoric acid fuel cell according to an embodiment of the present invention. The production method comprises step S1 of impregnating a matrix with a liquid electrolyte, step S2 of allowing the matrix impregnated with the liquid electrolyte to be interposed between an anode electrode and a cathode electrode each having an electrode catalyst layer to provide a stack, and step S3 of joining the matrix to the anode electrode and the cathode electrode by pressing the stack to provide an electrolyte electrode assembly.

In step S1, the matrix is impregnated with the liquid electrolyte.

In step S1, a material selected as the matrix can hold therein the impregnating liquid electrolyte and which can release the impregnating liquid electrolyte when the material is pressed. A polymer can be a preferable example of the selected material, and a basic polymer is specifically preferable for the following reason. The liquid electrolyte is acidic as described later on and, hence, the liquid electrolyte is strongly attracted by the basic polymer. Even if steam and water are generated when the phosphoric acid fuel cell is operated, the liquid electrolyte is greatly prevented from leaking from the matrix with the generated water and stream. In other words, the matrix is excellent in ability to hold the liquid electrolyte. Therefore, it is possible to prevent cell characteristics of the phosphoric acid fuel cell from being worsened.

The preferable basic polymer is exemplified by those having a structural unit of a monomer of secondary amine as represented by the following chemical formulas (1) to (4).

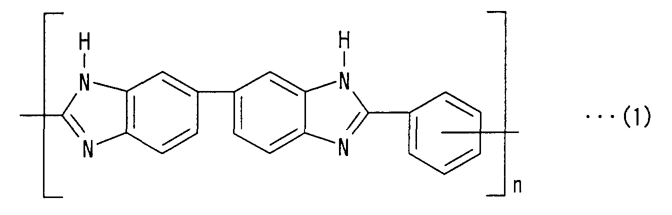

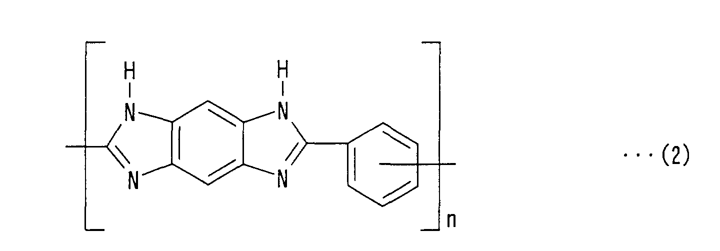

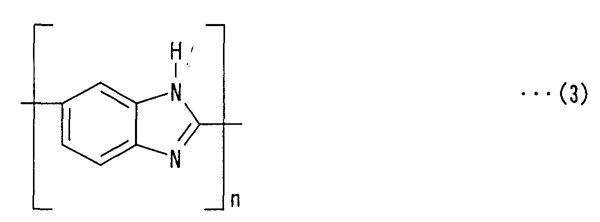

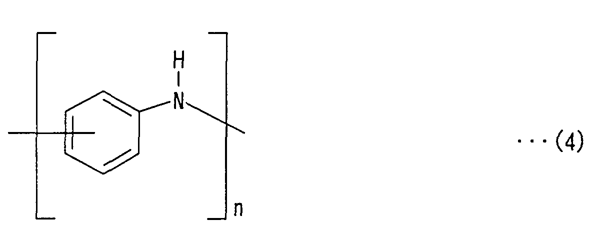

Polybenzimidazole represented by the chemical formula (1) is especially preferable because it is excellent in ability to hold the liquid electrolyte.

A liquid with hydrogen ion conductivity is selected as the liquid electrolyte with which the above matrix is impregnated. The liquid may be preferably exemplified by phosphoric acid, sulfuric acid, and methanesulfonic acid. Naturally, an amount of the liquid electrolyte with which the matrix is impregnated is more than an amount with which satisfying cell characteristics of the phosphoric acid fuel cell appear.

To impregnate the matrix with the liquid electrolyte, the matrix is immersed in the liquid electrolyte. Next, the immersed matrix is left still until concentration of the liquid electrolyte in the matrix is equilibrated.

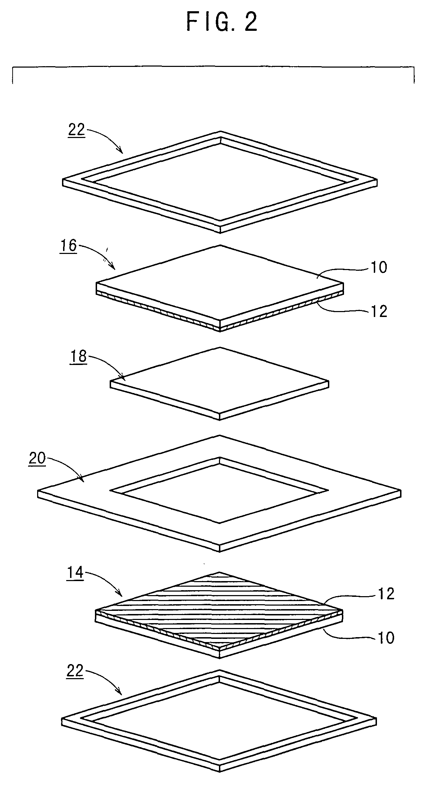

On the other, hand, one end surface of woven fabric or nonwoven fabric of carbon fiber is applied with carbon or the like on which a platinum-based alloy or the like is carried. Accordingly, as shown in FIG. 2, an anode electrode 14 and a cathode electrode 16 are obtained, each of which uses the former as a gas diffusion layer 10 and the latter as an electrode catalyst layer 12. In FIG. 2, the electrolyte layer obtained in step S1 is designated by reference numeral 18. Reference numerals 20, 22 indicate frame-shaped seal members for accommodating the electrolyte layer 18, the anode electrode 14, and the cathode electrode 16 respectively.

In step S2, the electrolyte layer 18, which is accommodated in the frame-shaped seal member 20, is interposed between the anode electrode 14 and the cathode electrode 16 which are accommodated in the frame-shaped seal members 22 to provide a stack. The anode electrode 14 and the cathode electrode 16 are stacked so that the electrode catalyst layer 12, 12 can be directed toward the electrolyte layer 18.

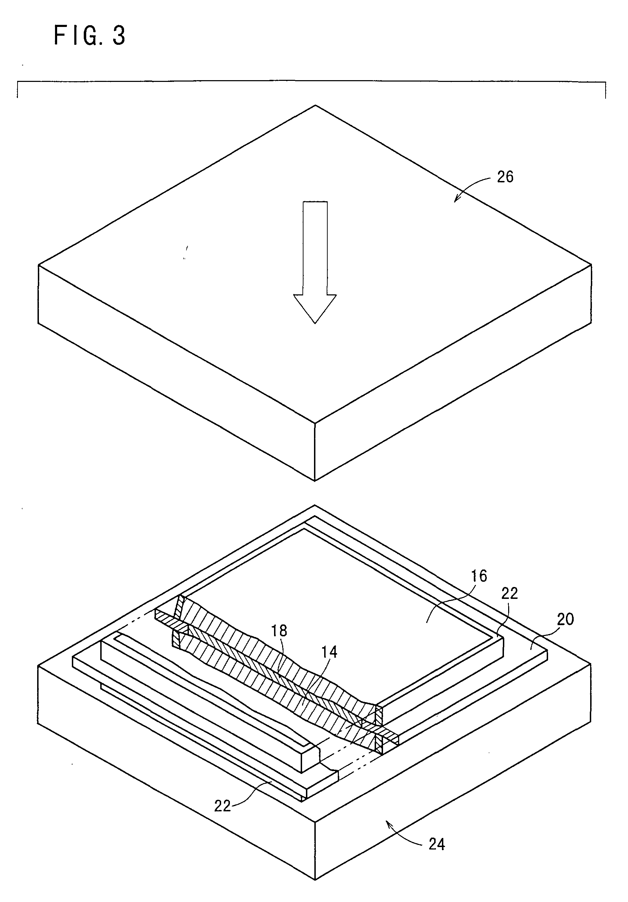

In step S3, as shown in FIG. 3 with partial cross section, an upper press plate 26 approaches the stack which is placed on a lower press plate 24 of a press machine (not shown) to press the stack with both of press plates 24, 26. The liquid electrolyte with which the matrix is impregnated is extruded by pressing the stack. As described above, the electrode catalyst layers 12, 12 of the anode electrode 14 and the cathode electrode 16 abut against the electrolyte layer 18. Therefore, after the extruded liquid electrolyte is diffused in directions toward the electrode catalyst layers 12, 12, the electrode catalyst layers 12, 12 are impregnated therewith.

The liquid electrolyte is relatively moved from the matrix to the electrode catalyst layers 12, 12 of the anode electrode 14 and the cathode electrode 16 when the stack is pressed. Next, the electrode catalyst layers 12, 12 are impregnated with the liquid electrolyte. Accordingly, it is not necessary to previously impregnate the electrode catalyst layers 12, 12 with the liquid electrolyte. In other words, since the step of impregnating the electrode catalyst layers 12, 12 with the liquid electrolyte is not necessary, it is possible to improve the efficiency of producing the power-generating cell, i.e., the phosphoric acid fuel cell.

Furthermore, the matrix and the electrode catalyst layers 12, 12 are joined to one another by pressing the stack. In other words, the electrolyte layer 18 is joined to the anode electrode 14 and the cathode electrode 16 to produce an electrolyte electrode assembly. Especially, when the matrix is composed of the basic polymer having the structural unit of the monomer of secondary amine as represented by the foregoing chemical formulas (1) to (4), an anchoring performance between the matrix and the electrode catalyst layers 12, 12 becomes excellent. Therefore, the electrolyte layer 18 is durably joined to the anode electrode 14 and the cathode electrode 16.

In the above procedure, the pressing force is preferably 1 MPa to 4 MPa. If the pressing force is less than 1 MPa, the electrolyte layer 18 may not be sufficiently joined to the anode electrode 14 and the cathode electrode 16. If the pressing force exceeds 4 MPa, the gas diffusion layer 10, 10 or the electrode catalyst layer 12, 12 of the anode electrode 14 or the cathode electrode 16 may be damaged.

The operation of pressing the stack in step S3 may be performed at room temperature. However, the pressing operation is preferably performed while applying a heating treatment to the stack since the electrolyte layer 18 is more durably joined to the anode electrode 14 and the cathode electrode 16.

Furthermore, the heat treatment lowers viscosity of the liquid electrolyte. Therefore, the liquid electrolyte is apt to be diffused and the electrode catalyst layers 12, 12 are impregnated with the liquid electrolyte with ease. Accordingly, it is possible to produce the phosphoric acid fuel cell more efficiently.

The temperature of the heat treatment is preferably within a range from a temperature slightly higher than the room temperature to a temperature of not more than 200 °C. If the temperature exceeds 200 °C, the water of the liquid electrolyte impregnating the electrolyte layer 18 is evaporated and the liquid electrolyte is concentrated. Strength of the electrolyte layer 18 may be then lowered.

When the matrix is composed of the basic polymer having the structural unit of the monomer of secondary amine as represented by the foregoing chemical formulas (1) to (4), the temperature range is more preferably 80 °C to 160 °C since the anchoring performance between the matrix and the electrode catalyst layers 12, 12 becomes more excellent.

The time of pressing and heating the stack is set so that the electrolyte layer 18 can be sufficiently joined to the anode electrode 14 and the cathode electrode 16. Specifically, when the temperature of the heat treatment is within the above range, the sufficient treatment time is 20 seconds to 60 seconds. Even if the treatment time exceeds 60 seconds, the electrolyte electrode assembly is not damaged and the liquid electrolyte is not concentrated as well. However, the efficiency of producing the phosphoric acid fuel cell is lowered.

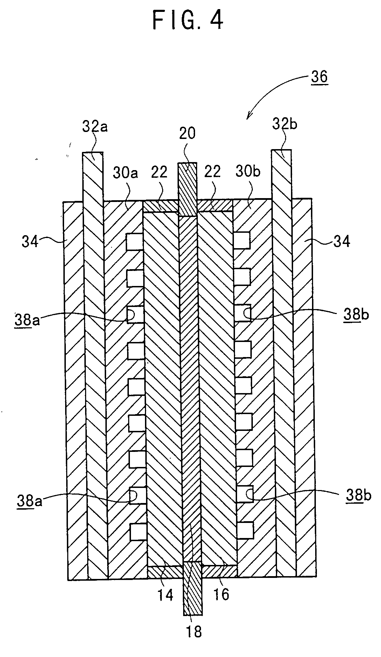

After the electrolyte electrode assembly thus obtained is interposed between a pair of separators 30a, 30b shown in FIG. 4, collecting electrodes 32a, 32b are attached to the outside of the separators 30a, 30b. Furthermore, end plates 34, 34 are attached to the outside of the collecting electrodes 32a, 32b respectively. The end plates 34, 34 are connected with each other by unillustrated bolts to provide a power-generating cell 36. The power-generating cell 36 is accommodated in an unillustrated container and, thus, the phosphoric acid fuel cell is obtained.

Gas flow passages 38a, 38b are formed on the respective separators 30a, 30b. The gas flow passage 38a serves as a passage for the fuel gas to be supplied to the anode electrode 14. By contrast, the gas flow passage 38b serves as a passage for the oxygen-containing gas to be supplied to the cathode electrode 16. The unreacted gas as well as the stream, the water or the like generated when the phosphoric acid fuel cell is operated are discharged from the container of the phosphoric acid fuel cell via the gas flow passages 38a, 38b.

Naturally, a predetermined number of the power-generating cells 36 may be electrically connected in series to construct a fuel cell stack. The fuel cell stack may be accommodated in a container to construct the phosphoric acid fuel cell thereby. In the above case, the electrolyte-electrode assemblies being interposed between the separators 30a, 30b are stacked to one another. The collecting electrode 32a, which is electrically connected to the anode electrodes 14 of the respective power-generating cells 36, is attached to the power-generating cell 36 positioned at the first end. Furthermore, the collecting electrode 32b, which is electrically connected to the cathode electrodes 16 of the respective power-generating cells 36, is attached to the power-generating cell 36 positioned at the second end. Furthermore, the end plates 34, 34 are attached to the outside of the collecting electrodes 32a, 32b respectively, and the end plates 34, 34 are connected to one another by the bolts or the like. Accordingly, the fuel cell stack can be constructed. In the fuel cell stack, the separators 30a, 30b intervene between the power-generating cells 36. Accordingly, the power-generating cells 36 are prevented from short circuit formation.

In summary, as described above, it is not necessary to impregnate the electrode catalyst layers 12, 12 of the anode electrode 14 and the cathode electrode 16 with the liquid electrolyte. Therefore, it is possible to efficiently produce the phosphoric acid fuel cell.

### Examples

### (1) Production of Phosphoric Acid Fuel Cell

A matrix, which was composed of a polybenzimidazole film of width: 66 mm x length: 66 mm x thickness: 50 µm, was weighed, and then it was immersed in phosphoric acid having a concentration of 50 % for not less than 24 hours. The concentration of phosphoric acid in the matrix was allowed to arrive at the equilibrium to provide an electrolyte layer 18 comprising the matrix impregnated with phosphoric acid. The electrolyte layer 18 was vacuum-dried at 80 °C and was weighed again. The weight was compared with that of the polybenzimidazole before the immersion to calculate the number of moles of phosphoric acid in each electrolyte layer 18 thereby. Furthermore, the number of molecules of phosphoric acid per structural unit of polybenzimidazole was calculated from the number of moles. As a result, the number of molecules of phosphoric acid per structural unit of polybenzimidazole was 3.0. The thickness of the electrolyte layer 18 (thickness of the matrix) was 81.5 µm.

On the other hand, an ethylene glycol solution, in which carbon powder and polytetrafluoroethylene powder were dispersed, was applied to one end surface of carbon cloth having a thickness of 300 µm. Next, the ethylene glycol solution was dried to volatilize and remove only ethylene glycol. Thus, a carbon/polytetrafluoroethylene layer was formed. This layer smoothes the surface of the carbon cloth and prevents phosphoric acid in the electrolyte layer 18 from seeping to the carbon cloth.

Porous carbon particles carrying a platinum alloy-based catalyst on the surface were moistened with pure water, and then they were dispersed in ethylene glycol. An obtained solution was uniformly applied onto the carbon/polytetrafluoroethylene layer described above by a screen printing method. The obtained solution was dried to volatilize and remove only ethylene glycol.

Accordingly, an anode electrode 14 and a cathode electrode 16 each having a thickness of 350 µm were manufactured, in each of which a gas diffusion layer 10 was composed of the carbon cloth formed with the carbon/polytetrafluoroethylene layer, and an electrode catalyst layer 12 was composed of the porous carbon particles with the platinum alloy-based catalyst carried on a surface thereof.

Subsequently, the anode electrode 14 and the cathode electrode 16 were accommodated in frame-shaped seal members 22, 22 respectively and the electrolyte layer 18 was accommodated in a frame-shaped seal member 20. Thereafter, the anode electrode 14, the electrolyte layer 18, and the cathode electrode 18 were superimposed with each other in this order to provide a stack. The sides of the electrode catalyst layers 12, 12 of the anode electrode 14 and the cathode electrode 16 abut against the electrolyte layer 18 at this time.

Subsequently, as shown in FIG. 3, the stack was placed on the lower press plate 24 of the press machine (not shown) to apply the pressure and the heat treatment by the aid of the lower press plate 24 and the upper press plate 26 under a condition in which the pressing force was 4 MPa, the temperature was 145 °C, and the time was 30 seconds. Accordingly, an electrolyte electrode assembly was obtained, in which the anode electrode 14 and the cathode electrode 16 were integrally joined to the both surfaces of the electrolyte layer 18.

Subsequently, separators 30a, 30b, on which gas flow passages 38a, 38b were provided, were arranged on both surfaces of the electrolyte electrode assembly (see FIG. 4). Further, collecting electrodes 32a, 32b and end plates 34, 34 were arranged at the outside of the separators 30a, 30b. Both of the end plates 34, 34 were connected to one another by unillustrated bolts. Thus, a power-generating cell 36 was manufactured.

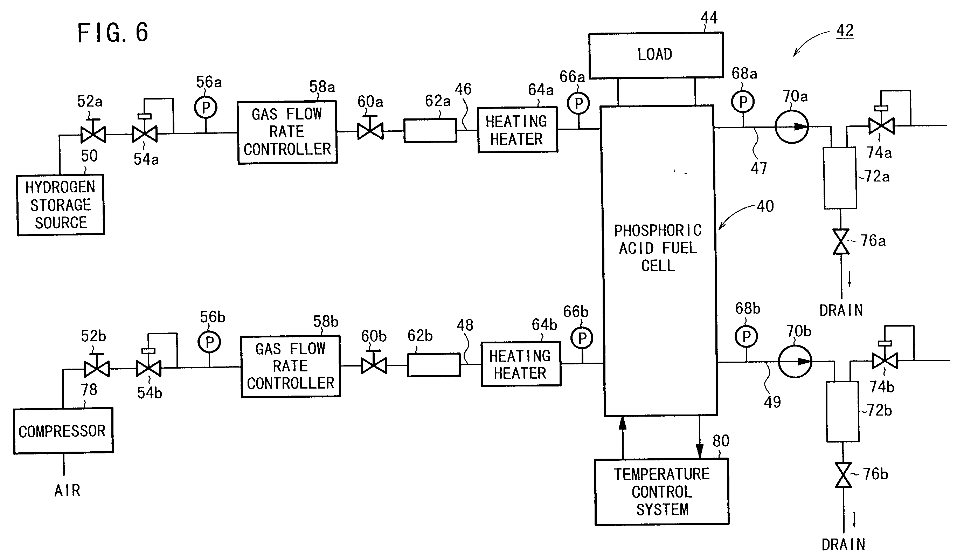

The power-generating cell 36 manufactured as described above was accommodated in a container, and thus a phosphoric acid fuel cell 40 as shown in FIG. 6 was produced. This was designated as Example 1.

Electrolyte layers 18 were manufactured in accordance with Example 1 except that the concentration of phosphoric acid was variously changed to 70 %, 80 %, and 85 %. The numbers of molecules of phosphoric acid per structural unit of polybenzimidazole in the respective electrolyte layers 18 were 5.3, 7.5, and 10.2. The thicknesses of the respective electrolyte layers 18 (thicknesses of the matrixes) were 85 µm, 91 µm, and 102 µm.

Phosphoric acid fuel cells 40, which were provided with power-generating cells 36 including the respective electrolyte layers 18 respectively, were produced. These were designated as Examples 2 to 4.

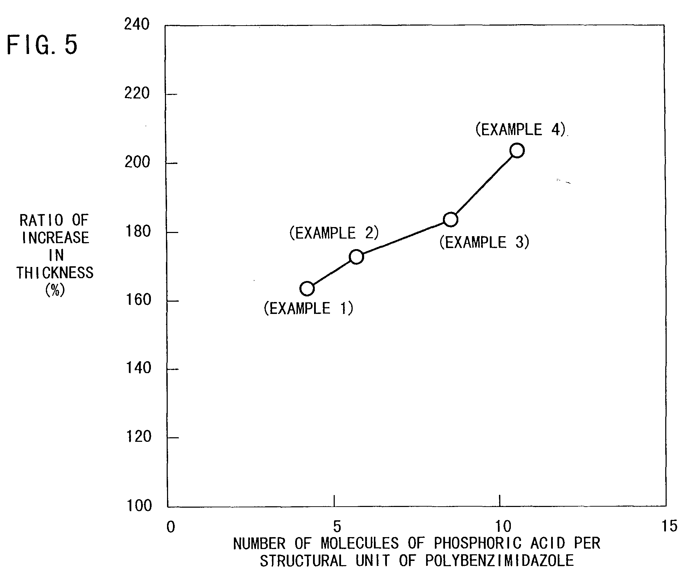

FIG. 5 shows a relationship between the number of molecules of phosphoric acid per structural unit of polybenzimidazole and the ratio of increase in thickness of the matrix in each of the electrolyte layers 18 of Examples 1 to 4. FIG. 5 makes it understandable that the thickness of the electrolyte layer 18 increases as the number of molecules of phosphoric acid increases.

### (2) Operation of Phosphoric Acid Fuel Cell

Peripheral equipments shown in FIG. 6 were incorporated into each of the phosphoric acid fuel cells 40 thus obtained to provide a fuel cell system 42.

That is, a load 44 was electrically connected to the collecting electrodes 32a, 32b of each of the phosphoric acid fuel cells 40 having the power-generating cell 36 (see FIG. 4) provided with the electrolyte layer 18 of Examples 1 to 4. By contrast, a fuel gas supply passage 46 (see FIG. 6) and a fuel gas discharge passage 47 communicating with a gas flow passage 38a of the power-generating cell 36 were connected to an oxygen-containing gas supply passage 48 and an oxygen-containing gas discharge passage 49 communicating with a gas flow passage 38b.

A hydrogen storage source 50 for supplying the hydrogen gas at a high pressure, a solenoid-operated valve 52a, a pressure-reducing valve 54a, a pressure sensor 56a, a gas flow rate controller 58a, a shut off valve 60a, a check valve 62a, a heating heater 64a, and an inlet side pressure sensor 66a were installed in this order into the fuel gas supply passage 46 from the upstream side thereof toward the inlet side of the phosphoric acid fuel cell 40. By contrast, an outlet side pressure sensor 68a, a heat exchanger 70a, a gas/liquid separator 72a, and a back pressure valve 74a were installed into the fuel gas discharge passage 47. Further, a solenoid-operated valve 76a was provided on the outlet side of the gas/liquid separator 72a.

The oxygen-containing gas supply passage 48 and the oxygen-containing gas discharge passage 49 were constructed in the same manner as the fuel gas supply passage 46 and the fuel gas discharge passage 47 described above. Therefore, in FIG. 6, the same constitutive components of the oxygen-containing gas supply passage 48 or the oxygen-containing gas discharge passage 49 as those of the fuel gas supply passage 46 or the fuel gas discharge passage 47 are designated by the same reference numerals affixed with symbol "b". A compressor 78 for supplying the air as the oxygen-containing gas was arranged on the upstream side of the oxygen-containing gas supply passage 48.

The temperature of operating the phosphoric acid fuel cell 40 was controlled by using a temperature control system 80.

In the construction as described above, at first, the temperature control system 80 was used to raise the temperature of the power-generating cell 36 so that the operation temperature of the phosphoric acid fuel cell 40 could be 160 °C.

The hydrogen gas was discharged from the hydrogen storage source 50 on the side of the fuel gas supply passage 46. The hydrogen gas was dealt with as follows. That is, the pressure was 201.3 kPa (absolute pressure, also in the following description) under an action of the pressure-reducing valve 54a, the gas flow rate controller 58a, the heating heater 64a or the like. The flow rate was set so that a ratio of utilizing the gas could be 67 %, which was determined by multiplying, by 100, the value obtained by dividing the amount of gas consumed for the reaction by the gas supply amount. The temperature was 160 °C. Thus, the hydrogen gas was supplied to the anode electrode 14 of the power-generating cell 36 via the gas flow passage 38a of the separator 30a (see FIG. 4).

On the other hand, the air as the oxygen-containing gas was discharged from the compressor 78 on the side of the oxygen-containing gas supply passages 48 (see FIG. 6). The air was supplied to the cathode electrode 16 of the power-generating cell 36 via the gas flow passage 38b of the separator 30b (see FIG. 4), while the pressure was 201.3 kPa, the flow rate was set so that the ratio of utilizing the gas could be 50 %, and the temperature was 160 °C under the action of the pressure-reducing valve 54b, the gas flow rate controller 58b, the heating heater 64b or the like.

The hydrogen gas or the air, which passed through the gas flow passages 38a, 38b without being supplied to the anode electrode 14 or the cathode electrode 16, was condensed with the heat exchanger 70a, 70b installed into the fuel gas discharge passage 47 (see FIG. 6) or the oxygen-containing gas discharge passage 49, followed by being separated into the gas component and the liquid component by the aid of the gas/liquid separator 72a, 72b. The liquid component was discharged from the fuel gas discharge passage 47 or the oxygen-containing gas discharge passage 49 via the solenoid-operated valve 76a, 76b. By contrast, the gas component was recovered with an unillustrated gas component-recovering mechanism via the back pressure valve 74a, 74b.

The discharge voltage of each of the phosphoric acid fuel cells 40 was lowered by gradually increasing the discharge current density for the load 44 to investigate the discharge current density at which the discharge voltage was 0.5 V. As a result, the discharge current density was 0.017 A/cm² in Example 1. The discharge current density was 0.188 A/cm², 0.537 A/cm², and 0.582 A/cm² in Examples 2 to 4 respectively.

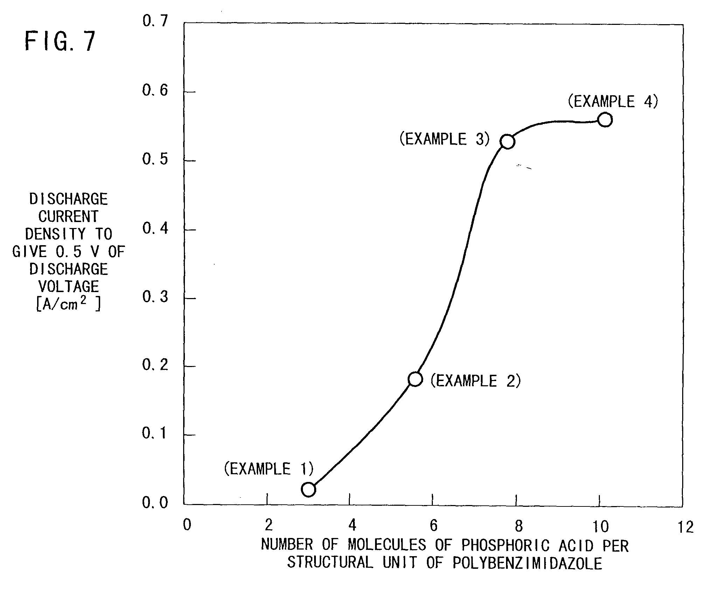

The result thus obtained is shown in FIG. 7 as a relationship between the number of molecules of phosphoric acid per structural unit of polybenzimidazole and the discharge current density. FIG. 7 makes it understandable that the larger the number of molecules of phosphoric acid per structural unit of polybenzimidazole is, the larger the discharge current density is, i.e., the larger an amount of electric energy to be successfully extracted from the phosphoric acid fuel cell is.

The above fact shown in FIG. 7 indicates that the phosphoric acid, with which the matrix is impregnated, is diffused to the electrode catalyst layers 12, 12 of the anode electrode 14 and the cathode electrode 16 (see FIG. 2) for the following reason. If the phosphoric acid is not diffused to the electrode catalyst layers 12, 12, the discharge current densities of the phosphoric acid fuel cells 40 of Examples 1 to 4 are substantially equivalent to one another.

In other words, the results of Examples 1 to 4 makes it clear that the phosphoric acid fuel cell 40 can be produced without impregnating the electrode catalyst layers 12, 12 with the liquid electrolyte by using, as the matrix, the material which can hold therein the impregnating liquid electrolyte and which can release the impregnating liquid electrolyte when the material as the matrix is pressed.

As explained above, when the electrolyte layer is joined to the anode electrode and the cathode electrode after it is prepared by impregnating the matrix with the liquid electrolyte, it is not necessary to previously impregnate the respective electrode catalyst layers of both of the electrodes with the liquid electrolyte. Therefore, it is possible to efficiently produce the phosphoric acid fuel cell.

## Claims

1. A method for producing a phosphoric acid fuel cell (40), comprising the steps of:
impregnating a matrix with a liquid electrolyte;
allowing said matrix impregnated with said liquid electrolyte to be interposed between an anode electrode (14) and a cathode electrode (16) each having an electrode catalyst layer (12, 12) to provide a stack; and
joining said matrix to said anode electrode (14) and said cathode electrode (16) by pressing said stack to provide an electrolyte electrode assembly, wherein:
said liquid electrolyte, with which said matrix is impregnated, is extruded to impregnate said electrode catalyst layers (12, 12) therewith when said joining step is performed.

2. The method for producing said phosphoric acid fuel cell (40) according to claim 1, wherein a basic polymer having a structural unit of a monomer of secondary amine is used as said matrix.

3. The method for producing said phosphoric acid fuel cell (40) according to claim 2, wherein polybenzimidazole is used as said basic polymer.

4. The method for producing said phosphoric acid fuel cell (40) according to any one of claims 1 to 3, wherein a force of pressing said stack is 10⁶ Pa to 4 x 10⁶ Pa when said joining step is performed.

5. The method for producing said phosphoric acid fuel cell (40) according to any one of claims 1 to 4, wherein a heating treatment, in which a temperature is up to 200 °C, is applied to said stack when said joining step is performed.

6. The method for producing said phosphoric acid fuel cell (40) according to claim 5, wherein a heating treatment time is 20 seconds to 60 seconds.
